# EUROPEAN PATENT SPECIFICATION

(11) **EP 3 671 435 B1**
(45) Date of publication and mention of the grant of the patent: **09.08.2023**
(21) Application number: 18306756.0
(22) Date of filing: 20.12.2018
(51) Int. Cl.: G06F 7/58

(54) **METHODS AND DEVICES FOR RANDOM NUMBER GENERATION**
VERFAHREN UND VORRICHTUNGEN ZUR ZUFALLSZAHLENGENERIERUNG
PROCÉDÉS ET DISPOSITIFS DE GÉNÉRATION DE NOMBRES ALÉATOIRES

(43) Date of publication of application: 24.06.2020
(73) Proprietor: Secure-IC SAS, 35510 Cesson-Sévigné (FR)
(72) Inventor: DAFALI, Rachid, 35131 CHARTRES-DE-BRETAGNE (FR)
(74) Representative: Atout PI Laplace

(56) References cited:
- CN-A- 107 769 910
- US-A1- 2015 146 869
- US-A1- 2018 314 781
- GU CHONGYAN ET AL: "A unique and robust single slice FPGA identification generator", 2014 IEEE INTERNATIONAL SYMPOSIUM ON CIRCUITS AND SYSTEMS (ISCAS), IEEE, 1 June 2014 (2014-06-01), pages 1223-1226, XP032624400, DOI: 10.1109/ISCAS.2014.6865362 [retrieved on 2014-07-24]

## Description

### TECHNICAL FIELD

The invention generally relates to true random number generators.

### BACKGROUND

Random Number Generators are widely used generate a set of random numbers which are needed by a system or device in various application fields such as for example to perform system validation by Monte Carlo simulations, to emulate channels for digital communications, or in security/cryptographic protocols, functions or algorithms which require randomness.

Specifically, in the field of cryptography, random numbers are used to generate secret keys and/or other parameters needed by symmetric-key/public-key cryptographic protocols or algorithms such as the Advanced Encryption Standard (AES) and the Elliptic Curve Digital Signature Algorithm (ECDSA). Such cryptographic protocols and algorithms are implemented in different types of systems or devices (e.g. embedded devices, smart-cards, smart-phones, Internet of Thing devices, etc.) in order to protect data, to secure communications, and/or to ensure users identification or authentication.

A random number generator forms a major component in hardware cryptography since it generates the cryptographic secret keys and nonce used by countermeasures and protections. The security of cryptographic key-based systems and devices depends strongly on the quality of the random number generator. High-quality random number generators are required to provide unpredictable randomness with high entropy and to generate high-quality random numbers regardless of environmental changes (e.g. temperature, voltage, etc.) that can be intentionally exploited by attackers to produce bias or faults on the generated random numbers.

CN 107 769 910 A discloses a random number generator based on NAND gates.

As defined in "NIST, Special Publication 800-22, A statistical test suite for random and pseudorandom number generators for cryptographic applications, 2010":
- randomness refers to the property according to which all the elements of a sequence of random numbers are generated independently of each other, and the value of the next element in the sequence cannot be predicted, and
- unpredictability refers to the property according to which each element of a random numbers sequence should appear to be the outcome of an independent random event.

Random numbers having a low randomness will generate weak secret keys, which, makes specific ciphers behave in some undesirable way. Predictable random numbers can be guessed by attackers and eavesdroppers using models, which affects the security of the cryptographic systems/devices implementing random number generators for cryptographic key generation.

Random number generators comprise random number generators of a first type which are non-deterministic and output a sequence of binary vectors which are statistically independent and unbiased, such as:
- True Random Number Generators (TRNGs),
- Non-Deterministic Random Bit Generators (NRBGs),
- Physical True Random Number Generators (PTRNGs), and
- Non-Physical True Random Number Generators (NPTRNGs).

Random number generators comprise random number generators of a second type which are deterministic and produce random numbers based on a seed generated by a TRNG and the internal current state, such as:
- Pseudo Random Number Generators (PRNGs),
- Deterministic Random Number Generators (DRNGs), and
- Deterministic Random Bit Generators (DRBGs).

TRNGs generate unpredictable random numbers by exploiting a physical source of randomness, also known as 'entropy source', which is based on an unpredictable physical phenomenon. DRNGs generate random sequences by using one or more inputs known as `random seeds' and a deterministic algorithm.

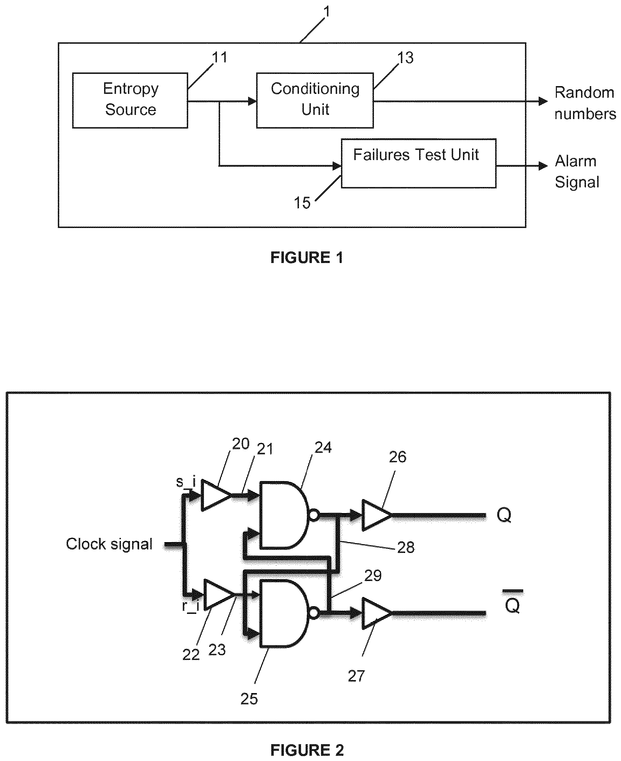

Figure 1 is a block diagram representing a structure of a TRNG 1 according to the prior art. A conventional TRNG 1 comprises three main blocks:
- an entropy source 11 (also referred to as a 'bit generator') which can be a component, a device, or an event that generates an unpredictable, statistically independent, and uniformly distributed bit-stream (raw),
- a conditioning unit 13 configured to reduce the bias of the raw bits produced by the entropy source 11, and
- a failures test unit 15 configured to, continuously, check the failures of the entropy source and output an alarm signal when a failure is detected.

The entropy source is an element that provides, after a digitization process, a bit-stream (Raw) which must be unpredictable, statistically independent and informally distributed. The entropy sources are often based on microscopic physical phenomena such as quantum mechanics and thermal noise. The entropy source is based on the use of electronic noise in semiconductors. The output of an integrated CMOS gate is affected by different noise components as thermal noise and shot noise which are intrinsic.

Thermal noise is caused by random motion of electrons in any resistive element due to thermal agitation as disclosed in "John Bertrand Johnson, Thermal agitation of electricity in conductors, Physical review, Volume 32, Issue 1, page 97, 1928". The thermal noise is chaotic and non deterministic.

A shot noise refers to the random fluctuations in the electrical current due to the electron discreteness and the stochastic nature of its flowing through the conductor, as disclosed in "W. Schottky, About spontaneous current variations in different electricity conductors, Annals of physics, Volume 362, pages 541-567, 1918". It is fundamentally non-deterministic and it occurs when charge carriers pass through a potential barrier such as a diode junction in MOS transistors.

The majority of the digital TRNG uses jittered oscillator sampling as an entropy source as disclosed for example in "RC Fairfield, RL Mortenson, KB Coulthart, An LSI Random Number Generator (RNG), in Proceedings of CRYPTO 84 on Advances in Cryptology, pages 203-230, 1985" and in "V Fischer, M Drutarovsk, True Random Number Generator Embedded in Reconfigurable Hardware, in Cryptographic Hardware and Embedded Systems-CHES, Volume 2523, pages 415-430, 2002". The jittered oscillator TRNGs use the jitter of a clock oscillator or the jitter of a ring oscillator as an entropy source. Using the former approach, random numbers are produced by sampling a high-frequency clock with a low-frequency clock by using a D-type flip-flip (DFF). Using the later approach, random numbers are produced by applying an exclusive-OR (XOR) operation to the outputs of multiple ring oscillators.

The jittered oscillator TRNG are not protected from external influences. An attacker can thus manipulate the randomness by injecting suitable electromagnetic waves to influence the frequency of the oscillators.

The metastable-based TRNGs exploit the metastability phenomenon, i.e. the voltage drift phenomenon around the half of the voltage level, to generate random bits. One approach uses the metastability of latches that occurs when the clock signal changes within a narrow window. The metastability window can vary with changes in the device voltage, the device temperature, and the fluctuations of the electrical noise.

Figure 2 is a schematic representation of a set-reset latch (also referred to as `RS-latch' or 'SR-latch') constructed using a pair of cross-coupled NAND logic gates. The RS-latch accordingly comprises two NAND gates 24 and 25 and buffer gates 20, 22, 26, and 27. The RS-latch receives a clock signal that is input to the NAND gate 24 and the NAND gate 25, and generates one bit of information labeled Q. The NAND gates are wired, using feedback wires 28 and 29, such that the output of the NAND gate 24 feeds back the input of the NAND gate 25 via the feedback wire 28 and the output of the NAND gate 25 feeds back the input of the NAND gate 24 via the feedback wire 29. When the clock signal is low, i.e. the logic input value is equal to '0', the RS latch is stable with output value Q='1'. When the clock signal is high, i.e. the logic input value changes from '0' to '1', the latch enters a metastable state which will resume in a random stable rate. By placing the latch on a metastable state, random numbers can be obtained from the output value Q by giving input clock signals, the final stable sate '0' or '1' obtained according to the value of the noise voltage introduced during the metastable state producing the random values.

Each wire in the latch design has a resistance and a capacitance. The routing rules for routing the signals and data carried by the wires depend on the resistance and capacitance of the wires. In particular, parasitic effects such as parasitic capacitance and parasitic resistance due to the proximity of the wires and/or the gates can cause crosstalk and extra signal propagation delay.

Several designs of RS-latches have been proposed using ideal RS-latches and automatic RS-latches. An exemplary implementation of metastability-based TRNGs on a Field Programmable Gate Array (FPGA) is disclosed in "H. Hata and S. Ichikawa, FPGA Implementation of Metastability-Based True Random Number Generator, IEICE Transactions on Information Systems, E95-D, Issue 2, pages 426-436, 2012".

Ideal RS-latches do not include the resistance-capacitance parasitic extracted from the wires especially for the feedback wires. Automatic RS-latches are located and routed automatically and never reach the metastability zone. Further, due to the difference in wiring delay between the gates and the difference of drive capability between the NAND gates, the output values are biased and the RS-latch generally generates only '0's or only '1's. In order to reduce the bias introduced by the routing of the feedback wires, a delay is added between the input signals *s_i* and *r_i* respectively input to the NAND gate 24 and the NAND gate 25. Such a design is referred to as a delay chain-based RS-latch. The introduced delay chain enable resolving the bias. However, it is very complicated to design and to calibrate and is sensitive to the environmental changes.

Metastability-based TRNGs produce high-quality random numbers, consume low power, and require a small scale. However, the design of such random number generators still face difficulties for placing latches on a metastable state and defining how many latches are required to reach a target source entropy.

There is accordingly a need for improved TNRGs forming secure sources of entropy that are independent, protected from external influence (such as physical and hardware attacks), and efficient in terms of providing high-quality random numbers.

### SUMMARY

In order to address these and other problems, there is provided a bit generator for generating random bits in a True Random Number Generator, the bit generator comprising one or more RS-latch circuits, each RS-latch circuit being configured to generate random bits, each RS-latch circuit comprising a first NAND gate, a second NAND gate, a first input buffer, a second input buffer, a first output buffer, and a second output buffer, the first NAND gate being connected to the first input buffer via a first input wire and being connected to the first output buffer via a first output wire, an output of the first NAND gate providing the generated random bits and being fed back to the second NAND gate via a first feedback wire, an output of the second NAND gate being fed back to the first NAND gate via a second feedback wire. The first feedback wire may comprise a first vertical wire routed vertically on a second metallic layer and a first horizontal wire, routed horizontally on a third metallic layer. The second feedback wire may comprise a second vertical wire routed vertically on the second metallic layer and a second horizontal wire routed horizontally on the third metallic layer. Each NAND gate and each buffer has one or more input ports and an output port. The first and second feedback wires have same points of connections with said input and output ports, the same length of the first vertical wire and of the second vertical wire being used at the routing on the second metallic layer, and the same lengths of the first horizontal wire of the first feedback wire and the second horizontal wire of the second horizontal wire being used at the routing on the third layer.

According to some embodiments, the first NAND gate may be positioned at a given position within the latch circuit and the second NAND gate may be positioned at a second position, the second position being determined from the position of the first NAND gate, the second NAND gate being rotated using a 180 degree counterclockwise rotation around a fixed rotation axis.

According to some embodiments, the first input buffer may be positioned at the right of the first NAND gate, the first input buffer and the first NAND gate being arranged side-by-side. The second input buffer may be positioned at the right of the first NAND gate and rotated using a 180 degree counterclockwise rotation around the rotation axis, the second input buffer and the first NAND gate being arranged side-by-side.

According to some embodiments, the first output buffer may be arranged at the left side of the latch circuit face to the first NAND gate, with a predetermined space between the first output buffer and the first NAND gate.

According to some embodiments, the first output wire may connect an output port of the first NAND gate to an input port of the first output buffer, the input port of the first output buffer being positioned face to the output port of the first NAND gate, the routing of the first and the second feedback wires being arranged in the predetermined space between the first output buffer and the first NAND gate, the predetermined space being dependent on the length of the first vertical wire and of the length of the first horizontal wire.

According to some embodiments, the second output buffer may be arranged at a distance of the first output buffer and rotated using a 180 degree counterclockwise rotation around the rotation axis.

According to some embodiments, the second NAND gate may be connected to the second input buffer via a second input wire and to the second output buffer via a second output wire.

According to some embodiments, the first input wire and the second input wire may have a same wire length and may be routed using a wire of a first metallic layer.

According to some embodiments, the wire length of the first input wire and of the second input wire may be determined depending on the wire resistance parasitics and wire capacitance parasitics associated with the first input wire and the second input wire.

According to some embodiments, the first input wire may connect an output port of the first input buffer to an input port of the first NAND gate, the output port of the first input buffer being arranged close to the input port of the first NAND gate so as to minimize of the length of the first input wire.

According to some embodiments, the number of latches may be previously determined according to a target source entropy.

According to some embodiments, the first input buffer and the second input buffer may be configured to simultaneously receive a clock signal.

According to some embodiments, the one or more RS-latch circuits may be configured to receive a clock signal at the same time, the first input buffer and the second input buffer of each of the one or more RS-latch circuits being configured to simultaneously receive the clock signal.

There is also provided a cryptographic system for generating one or more cryptographic keys, the cryptographic system comprising a bit generator of a true number generator for generating random bits according to any preceding feature, the cryptographic system comprising a key generator for generating one or more cryptographic keys using the generated random bits.

The embodiments of the invention provide high-quality and high performing TRNGs capable of producing unbiased random numbers that are compliant with statistical tests.

Advantageously, the TRNGs according to the embodiments of the invention are resilient to hardware attacks such as EM injection attacks.

Further, the arrangement and routing rules according to the embodiments of the invention provide efficient sources of entropy for TRNGs based on RS-latches capable of producing random numbers for a target, desired or specified entropy. The arrangement and routing rules enable further reducing the parasitic resistance and capacitance between the components/elements of the RS-latch and the wires connecting these components, thus reducing the power consumption.

Advantageously, the design of RS-latches according to the embodiments of the invention is independent from the delay chain and the environmental changes or variations including the device temperature variation, the changes on the clock frequency, and/or the load feeding the TRNG. The output of the proposed RS-latches then depends only on the intrinsic noise.

The design of TRNGs according to the embodiments of the invention is easy to implement and does not require the validation of the test-chip. Such designs enable further reducing the number of defective TRNG circuits.

It is another advantage of the TRNGs according to the embodiments of the invention to reduce the latency of circuit startup. The entropy source does not need to accumulate the randomness trough a long time and the first generated bits can be used.

Advantageously, the various embodiments of the invention provide efficient techniques for reinforcing the security and protection of cryptographic devices by increasing the difficulty of reverse-engineering aiming at extracting cryptographic keys.

Further advantages of the present invention will become clear to the skilled person upon examination of the drawings and the detailed description, provided for illustration purposes only. The invention is defined by the appended claims.

### BRIEF DESCRIPTION OF THE DRAWINGS

The accompanying drawings, which are incorporated in and constitute a part of this specification, illustrate various embodiments of the invention, together with the general description of the invention given above and the detailed description of the embodiments given below.
Figure 1 is a block diagram illustrating the structure of a True Random Number Generator of the prior art;
Figure 2 represents an RS-latch of the prior art;
Figure 3 is a block diagram illustrating an exemplary application of a TRNG, according to some embodiments of the invention;
Figure 4 is a circuit layout illustrating an RS-latch-based source of entropy of a TRNG, according to some embodiments of the invention;
Figure 5 is a circuit layout illustrating a source of entropy based on a plurality of RS-latches;
Figure 6 is a flowchart illustrating a method for generating random values, according to some embodiments of the invention using one or more routed and placed RS-latch circuits.

### DETAILED DESCRIPTION

Embodiments of the invention provide devices and methods for efficient, secure, and high-quality generation of random numbers in True Random Number Generators. More specifically, the devices and methods according to the various embodiments of the invention provide improved arrangement and wires routing rules for the design of RS-latches based sources of entropy, the arrangement and routing providing sources of entropy that are resilient to physical attacks and environmental changes and are capable of producing random bits according to a target source entropy.

The sources of entropy provided according to the embodiments of the invention may be implemented in any True Random Number Generator for generating random values. A True Random Number Generator according to the embodiments of the invention may be used in many types of applications such as:
- in simulation and modeling of complex phenomena: e.g. in Monte Carlo integration used in finance and in engineering fields;
- in random sampling for the selection of random samples from larger data sets;
- in games, lottery, and gambling systems for users authentication and signing, encryption, digital signature of documents and transactions, authenticity of contents, database encryption to ensure a secure storage of users, accounts, and transactions data;
- in Information Technology security applications and cryptographic protocols and algorithms for generating secret/private/shared data encryption keys used in symmetric and public-key crypto-systems, generating initialization vectors, padding, seeding messages and passwords, and in internet encryption protocols such as secure socket layer (SSL);
- in chip manufacturing and seeding of device-specific keys, e.g. for Near Field Communication or device IDs;
- In machine learning and statistical learning, true random number generators may be used to obtain samples from random distributions (e.g. Gamma, Beta).

In cryptographic applications, True Random Numbers Generators according to the various embodiments of the invention may be implemented in cryptographic devices and/or systems that implement cryptographic functions based on one or more cryptographic keys to ensure data and/or signals security, authentication, protection, and privacy. Exemplary cryptographic devices comprise:
- smart cards, tokens to store keys such as wallets, smart cards readers such as Automated Teller Machines (ATM) used for example in financial transactions, restricted accesses, telecommunications, military applications, secure communication equipments, and TV set-top boxes;
- electrical and digital electronic devices such as RFID tags and electronic keys;
- embedded secure elements;
- computers (e.g. desktop computers and laptops), tablets;
- routers, switches, printers;
- mobile phones such as smart-phones, base stations, relay stations, satellites;
- Internet of Thing (IoT) devices, robots, drones; and
- recorders, multimedia players, mobile storage devices (e.g. memory cards and hard discs) with logon access monitored by cryptographic mechanisms.

Exemplary cryptographic systems comprise:
- communication systems (e.g. digital wired, wireless, cellular/radio, optical, satellite, acoustic, and molecular communication and transmission systems) in which key-based cryptographic functions are used for ensuring a secure transfer of data over unsecure transmission channels and are used in user equipments such as in mobile phones and smart-phones to authenticate the control and access to batteries and accessories;
- computing networks/systems in which secret keys may be used for securing data center interconnections;
- digital data storage (e.g. cloud computing applications and cloud servers);
- recording systems (e.g. magnetic and optical recording);
- data processing systems(e.g. databases, online sale systems, financial systems);
- positioning systems;
- digital television and video broadcasting systems;
- identity systems (e.g. electronic passports, cryptographic identity documents);
- transportation and automotive devices (e.g. autonomous cars, connected cars, inertial guidance systems, GPS receivers, motor controllers, electric and hybrid vehicles to ensure anti-theft protection);
- service provider systems to provide restricted and authorized accesses;
- banking systems to secure banking accounts and financial transactions;
- medical device to secure medical data and medical devices such as implantable medical devices which can be implanted within the body to treat a medical condition or to monitor the state of the functioning of some body parts (e.g. pacemakers, defibrillators to monitor and treat cardiac conditions, brain monitoring or stimulation devices such as neuro-stimulators for deep brain stimulation in cases such as epilepsy or Parkinson, drug delivery systems, biosensors); or
- in digital electronic systems for securing hardware modules and electronic components embedded for example in smart-cards or electrical vehicles.

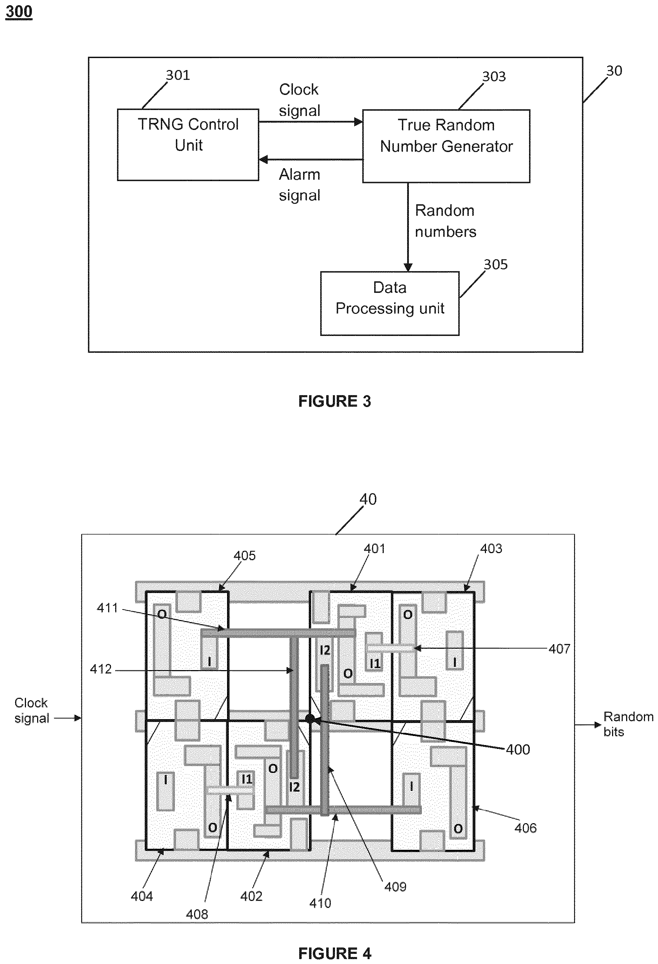

Referring to figure 3, there is shown an exemplary implementation of a True Random Number Generator 303 in a device 30 implemented in a system 300.

The system 300 may be for example a communication system (e.g. digital, wired, wireless, cellular, optical, satellite, acoustic, and molecular communication system), a data processing system (e.g., online sale systems, financial systems, electronic passport systems, banking), a data storage system (e.g. databases), a recording system (e.g. magnetic and optical recording), a positioning system, etc.

The device 30 may be any integrated circuit device, computer, computing machine, or embedded system, programmed and/or programmable (e.g. a Field Programmable Gate Array circuit, an Application Specific Integrated Circuit, a system on chip, a Very-Large Scale Integration integrated circuit) to implement a True Random Number Generator for generating random values/numbers. The device 30 may be a system on chip that integrates on a single integrated circuit all the components of a computing machine or computer including a central processing unit, memory means, and input/output peripherals/ports.

In an application of the invention to a communication system, the device 30 may be fixed or mobile, configured to operate in a wired, wireless, or optical fiber-based communication network. The device 30 may be a standalone device or may be connected to external devices, machines or systems. The device 300 may be implemented for example in a computer networking system (using for example one or more small or large area wired or wireless access networks).

The True Random Number Generator 303 may be any physical component/device or integrated circuit configured to generate random numbers. The True Random Number Generator 303 may further generate alarm signals in case of failures of the source of entropy detected by a failures test unit implemented in the TRNG 303 (the failures test unit is not shown in figure 1).

As shown in figure 3, the device 30 may comprise a TRNG control unit 301 configured to generate clock signals and to send out the clock signals on a regular basis to the True Random Number Generator 303 and all other components of the device 30. The TRNG control unit 301 may be configured to stop the clock signal input to the TRNG 303 for saving power consumption when random numbers generation is not required.

The TRNG control unit 301 may be further configured to set or to store the failures test(s) to be performed by the failures test unit to test the output sequence of the TRNG 303 online, i.e. during the operation of the TRNG 303. The TRNG control unit 301 may be configured to send one or more failures tests to the TRNG 303 at the TRNG reset and then continuously, periodically at specified regular time intervals, or permanently.

The failures tests may be statistical tests performed to measure the entropy per bit of the TRNG 303 and to check if the output of the TRNG 303 is stuck outputting periodically the same numbers or long sequences of zero-value bits ('0') or one-value bits (`1'). The failures tests may be previously fixed/determined/selected according to the level of security required (for example from certification standards or depending on the application).

The TRNG control unit 301 may be further configured to receive the alarm signals generated by the TRNG 303 in order to perform one or more control actions depending on the alarm signals.

The random numbers generated by the TRNG 303 may be sent to a data processing unit 305 (e.g. a processor) for a further use for example for generating cryptographic keys. The random numbers may be stored inside a security module e.g. a Hardware Security Module prior to their usage.

The embodiments of the invention are related to metastability-based True Random Number Generators in which the source of entropy takes advantage of the metastability behavior of RS-latches in order to generate random bits. More specifically, the embodiments of the invention provide an arrangement of RS-latches used in a source of entropy. In such arrangement, the components of RS-latch circuits are arranged and interconnected via wires according to specific routing rules that enable advantageously reducing the resistance and capacitance parasitic and achieving a target source entropy rate.

Referring to figure 4, there is shown an entropy source for producing random bits in a True Random Number Generator 303. The entropy source comprises one or more RS-latch circuits 40. Each RS-latch circuit 40 is configured to receive the clock signal sent from the TRNG control unit 301 to the True Random Number Generator 303 and to generate random bits. Each RS-latch circuit 40 may comprise:
- a first NAND gate 401;
- a second NAND gate 402;
- a first input buffer 403;
- a second input buffer 404;
- a first output buffer 405; and
- a second output buffer 406.

The first input buffer 403 and the second input buffer 404 are configured to simultaneously receive the clock signal sent from the TRNG control unit 301 to the True Random Number Generator 303.

The first NAND gate 401 is connected to the first input buffer 403 via a first input wire 407 and is connected to the first output buffer 405 via a first output wire 411. The output of the first NAND gate 401 produces random bits stored bit-by-bit in the first output buffer 405 and fed back to the second NAND gate 402 via a first feedback wire 412.

The second NAND gate 402 is connected to the second input buffer 404 via a second input wire 408 and is connected to the second output buffer 406 via a second output wire 410. The output of the second NAND gate 402 is fed back to the first NAND gate 401 via a second feedback wire 409.

According to the embodiments of the invention, the arrangement of the different gates and buffers and the routing of the interconnect wires connecting the gates and the buffers are performed such that, in each RS-latch circuit 40, the first NAND gate 401 is positioned at a given position within the RS-latch circuit 40. Then, the second NAND gate 402 is positioned at a second position, the second position being determined by arranging the second NAND gate 402 at the given position of the first NAND gate 401 and then rotating the second NAND gate 402 using a 180 degree counterclockwise rotation around a fixed rotation axis represented by the origin 400 such that the first NAND gate 401 and the second NAND gate 402 are in axial symmetry around the fixed rotation axis.

After arranging the first and second NAND gates, the first input buffer 403 is positioned at the right of the first NAND gate 401, the first input buffer 403 and the first NAND gate 401 being arranged side-by-side. The second input buffer 404 is positioned at the right of the first NAND gate 401 and then rotated using a 180 degree counterclockwise rotation around said rotation axis such that the first input buffer 403 and the second input buffer 404 are in axial symmetry around the fixed rotation axis and the second input buffer 404 and the first NAND gate are arranged side-by-side.

Then, the first output buffer 405 and the second output buffer 406 are arranged. The first output buffer 405 is arranged at the left side of the RS-latch circuit 40 face to the first NAND gate 401 with a predetermined between the first output buffer 405 and the first NAND gate 401. The second output buffer 406 is then arranged at the position of the first output buffer 405 and rotated using a 180 degree counterclockwise rotation around the fixed rotation axis such that the first output buffer 405 and the second output buffer 406 are in axial symmetry around the fixed rotation axis.

The interconnection of the NAND gates and the buffers is realized using different wires routed on three different metallic layers. More specifically:
- the first input wire 407 and the second input wire 408 are routed using a wire of a first metallic layer and they have a same predefined first wire length;
- the first feedback wire is routed using a first vertical wire 409 routed vertically on a second metallic layer and a first horizontal wire 410 routed horizontally on a third metallic layer; and
- the second feedback wire is routed using a second vertical wire 412 routed vertically on the second metallic layer and a second horizontal wire 411 routed horizontally on the third metallic layer.

Advantageously, routing the first input wire 407 and the second output wire 408 using a first metallic layer enables reducing the resistance/capacitance parasitics.

As shown in figure 4, each NAND gate and each buffer has one or more input ports labeled 'I' or 'I1' or 'I2' and an output port labeled 'O'. More specifically, the **first input wire** 407 connects the output port of the first input buffer 403 to the input port 'I1' of the first NAND gate 401. The arrangement of the first input buffer 403 may be advantageously performed such that the output port of the first input buffer 403 is arranged close to the input port of the first NAND gate 401 in a way that the routing wire, i.e. the first input wire 407, connecting them has a minimum length, i.e. so as to minimize length of the first input wire 407.

Further, the first output wire 411 connects the output port 'O' of the first NAND gate 401 to the input port 'I' of the first output buffer 405. In some embodiments, the input port 'I' of the first output buffer 405 may be arranged facing the output port 'O' of the first NAND gate 401 such that the predetermined space between the first output buffer 405 and the first NAND gate 401 is used to route the first feedback wire and the second feedback wire, the predetermined space being previously determined depending on the lengths of the first vertical wire 409 and the length of the first horizontal wire 410, both used to route the first feedback wire.

According to some embodiments, the first feedback wires 411 and 412 and the second feedback wires 409 and 410 must be identical to get a metastable state, i.e. to arrange the RS-latch circuit 40 in a metastable state. Identical wires means that the first feedback wire and the second feedback wire are required to have: 1) same points of connections with the input/output ports, 2) same lengths of the first vertical wire 409 and the second vertical wire 412 used at the routing on the second layer, and 3) same lengths of the first horizontal wire 410 and the second horizontal wire 411 used at the routing on the third layer.

According to some embodiments, the predefined first wire length of the first input wire 407 and the second input wire 408 may be previously determined according to the reduction of wire resistance parasitics and wire capacitance parasitics associated with the first input wire 407 and the second input wire 408.

According to some embodiments in which the entropy source implements one or more RS-latch circuits 40, the number of the one or more RS-latch circuits 40 may be previously determined according to a target source entropy rate such that the entropy source using the determined number of RS-latch circuits 40 achieves the target source entropy rate.

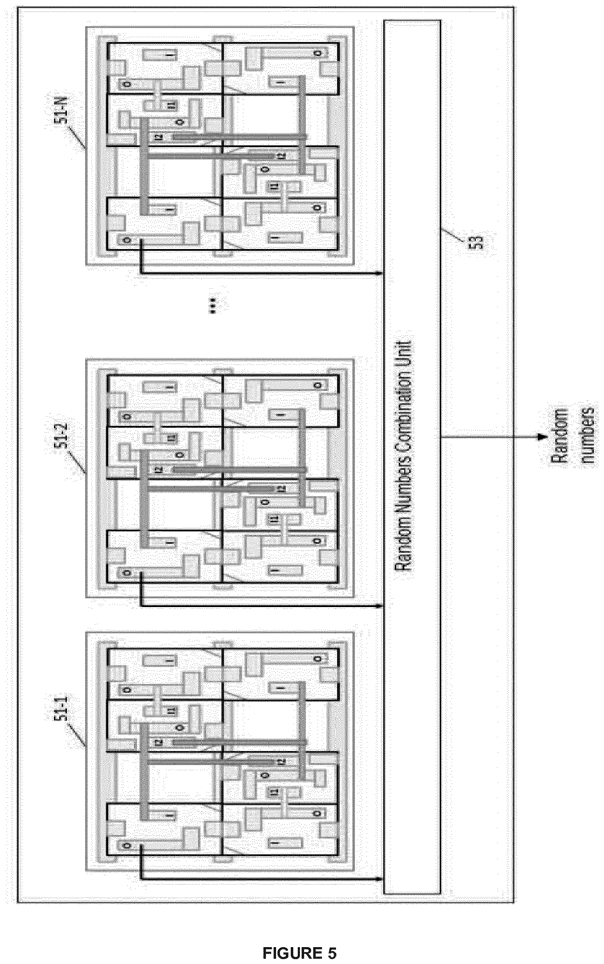

Referring to figure 5, there is shown an entropy source comprising a plurality (two or more) of RS-latch circuits 51-n with *n* = 1, ....,*N* and *N* ≥ 2 designating the number of RS-latch circuits used. In such embodiments, the entropy source may further comprise a random numbers combination unit 53 configured to combine the random bits generated by each of the two or more RS-latch circuits 51-n by applying an exclusive OR operation, which provides the random bits to be generated by the True Random Number Generator 303.

According to some embodiments in which the entropy source comprises two more RS-latch circuits 40, the RS-latch circuits may be configured to receive the clock signal at the same time, i.e. each first input buffer 403 and second input buffer 404 of each of the two or more RS-latch circuits 40 simultaneously receive the clock signal.

According to some embodiments, the random bits generated by the source entropy may be used to generate one or more cryptographic keys to be used for example for data and/or signal encryption and/or decryption, for message authentication, in digital signatures, or for ensuring data and/or signals security and privacy. The one or more cryptographic keys may be used in key-based encryption algorithms comprising symmetric encryption algorithms (e.g. DES (Data Encryption Standard), 3DES, AES (Advanced Encryption Standard), and RC4 (Rivest Cipher 4)) and asymmetric encryption algorithms (e.g. RSA (Rivest-Shamir-Adleman) and ECDSA (Elliptic Curve Digital Signature Algorithm)). The random bits may be alternatively used to determine one or more secret values such as passwords to be stored in the device 30 and/or shared between the device 30 and one or more external devices/machines/users connected to the system 300.

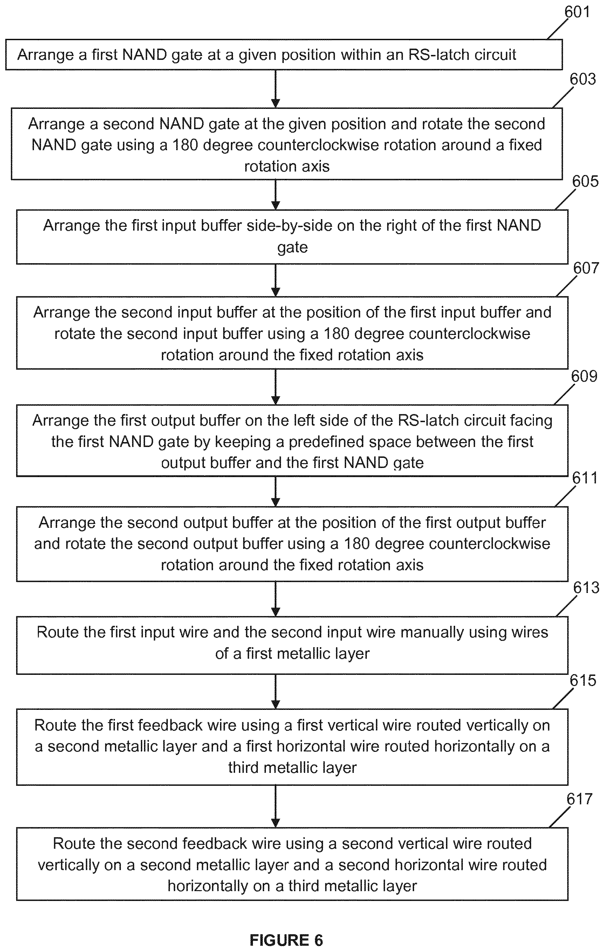

Referring to figure 6, there is also provided a method for producing random bits in an entropy source of a True Random Number Generator, the entropy source exploiting the metastability behavior of one or more RS-latch circuits to generate random bits. Each RS-latch circuit is configured to generate random bits and comprises a first NAND gate, a second NAND gate, a first input buffer, a second input buffer, a first output buffer, and a second output buffer, the first NAND gate being connected to the first input buffer via a first input wire and being connected to the first output buffer via a first output wire. The output of the first NAND gate produces random bits and the produced random bits are fed, a bit per clock signal, back to the second NAND gate via a first feedback wire. The second NAND gate is connected to the second input buffer via a second input wire and is connected to the second output buffer via a second output wire. The output of the second NAND gate is fed back to the first NAND gate via a second feedback wire. The method provides arrangement of the NAND gates and the input and output buffers as well as a routing of the wires interconnecting the different NAND gates and the input/output buffers in a way that the random bits are generated with a high randomness level, satisfying a target source entropy rate, while being secured and protected against any external attacks (hardware attacks) and any environmental changes (e.g. temperature, voltage).

At step 601, the first NAND gate may be arranged at a given position within an RS-latch circuit.

At step 603, the second NAND gate may be arranged at a second position, the second position being determined by arranging the second NAND gate at the given position on which is arranged the first NAND gate and rotating the second NAND gate using a 180 degree counterclockwise rotation around a fixed rotation axis.

At step 605, the first input buffer may be arranged side-by-side on the right of the first NAND gate.

At step 607, the second input buffer may be arranged side-by-side on the right of the first NAND gate then rotated using a 180 degree counterclockwise rotation around the fixed rotation axis.

At step 609, the first output buffer may be arranged on the left side of the RS- latch circuit facing the first NAND gate, a predefined space being left between the first output buffer and the first NAND gate.

At step 611, the second output buffer may be arranged at the position of the first output buffer then rotated using a 180 degree counterclockwise rotation around the fixed rotation axis.

At step 613, the first input wire and the second input wire may be routed using wires of a first metallic layer, the first input wire and the second input wire having a same predefined first wire length.

At step 615, the first feedback wire may be routed using a first vertical wire routed vertically on a second metallic layer and a first horizontal wire routed horizontally on a third metallic layer.

At step 617, the second feedback wire may be routed using a second vertical wire routed vertically on the second metallic layer and a second horizontal wire routed horizontally on the third metallic layer.

While embodiments of the invention have been illustrated by a description of various examples, and while these embodiments have been described in considerable details, it is not the intent of the applicant to restrict or in any way limit the scope of the appended claims to such embodiments. Some of those embodiments may be advantageously combined, when appropriate. Additional advantages and modifications will readily appear to those skilled in the art. The invention in its broader aspects is therefore not limited to the specific details, representative methods, and illustrative examples shown and described.

## Claims

1. A bit generator (11) for generating random bits in a True Random Number Generator, the bit generator (11) comprising one or more RS-latch circuits (40), each RS-latch circuit (40) being configured to generate random bits, each RS-latch circuit (40) comprising a first NAND gate (401), a second NAND gate (402), a first input buffer (403), a second input buffer (404), a first output buffer (405), and a second output buffer (406), the first NAND gate (401) being connected to the first input buffer (403) via a first input wire (407) and being connected to the first output buffer (405) via a first output wire (411), an output of the first NAND gate (401) providing said generated random bits and being fed back to the second NAND gate (402) via a first feedback wire, an output of the second NAND gate (402) being fed back to the first NAND gate (401) via a second feedback wire, wherein:
- the first feedback wire comprising a first vertical wire (409) routed vertically on a second metallic layer and a first horizontal wire (410), routed horizontally on a third metallic layer, and
- the second feedback wire comprises a second vertical wire (412) routed vertically on said second metallic layer and a second horizontal wire (411) routed horizontally on said third metallic layer,
wherein each NAND gate and each buffer has one or more input ports and an output port,
wherein the first and second feedback wires (409, 412) have same points of connections with said input and output ports, the same length of the first vertical wire (409) and of the second vertical wire (412) being used at the routing on the second metallic layer, and the same lengths of the first horizontal wire (410) of the first feedback wire and the second horizontal wire (411) of the second feedback wire being used at the routing on the third metallic layer.

2. The bit generator (11) of claim 1, wherein the first NAND gate (401) is positioned at a given position within said RS-latch circuit (40) and the second NAND gate (402) is positioned at a second position, said second position being determined from the position of the first NAND gate (402), the second NAND gate (402) being rotated using a 180 degree counterclockwise rotation around a fixed rotation axis.

3. The bit generator (11) of any preceding claim 1 and 2, wherein the first input buffer (403) is positioned at the right of the first NAND gate (401), the first input buffer (403) and the first NAND gate (401) being arranged side-by-side, and wherein the second input buffer (404) is positioned at the right of the first NAND gate (401) and rotated using a 180 degree counterclockwise rotation around said rotation axis, the second input buffer (404) and the first NAND gate (401) being arranged side-by-side.

4. The bit generator (11) of claim 1, wherein the first output buffer (405) is arranged at the left side of the RS-latch circuit (40) face to the first NAND gate (401), with a predetermined space between the first output buffer (405) and the first NAND gate (401).

5. The bit generator (11) of claim 4, wherein the first output wire (411) connects an output port of the first NAND gate (401) to an input port of the first output buffer (405), the input port of the first output buffer (405) being positioned face to the output port of the first NAND gate (401), the routing of the first and the second feedback wires being arranged in said predetermined space between the first output buffer (405) and the first NAND gate (401), said predetermined space being dependent on the length of said first vertical wire (409) and of the length of said first horizontal wire (410).

6. The bit generator (11) of any preceding claim 4 and 5, wherein the second output buffer (406) is arranged at a distance of said first output buffer (405) and rotated using a 180 degree counterclockwise rotation around said rotation axis.

7. The bit generator (11) of any preceding claim, wherein the second NAND gate (402) is connected to the second input buffer (404) via a second input wire (408) and to the second output buffer (406) via a second output wire (410).

8. The bit generator (11) of claim 7, wherein the first input wire (407) and the second input wire (408) have a same wire length and are routed using a wire of a first metallic layer.

9. The bit generator (11) of claim 8, wherein the wire length of the first input wire (407) and of the second input wire (408) is determined depending on the wire resistance parasitics and wire capacitance parasitics associated with said first input wire (407) and said second input wire (408).

10. The bit generator (11) of any preceding claim, wherein the first input wire (407) connects an output port of the first input buffer (403) to an input port of the first NAND gate (401), the output port of the first input buffer (403) being arranged close to the input port of the first NAND gate (401) so as to minimize of the length of the first input wire (407).

11. The bit generator (11) of any preceding claim, wherein the number of said one or more RS-latch circuits (40) is previously determined according to a target source entropy.

12. The bit generator (11) of any preceding claim, wherein the first input buffer (403) and the second input buffer (404) are configured to simultaneously receive a clock signal.

13. The bit generator (11) of any preceding claim, wherein the one or more RS-latch circuits (40) are configured to receive a clock signal at the same time, the first input buffer (403) and the second input buffer (404) of each of the one or more RS-latch circuits (40) being configured to simultaneously receive said clock signal.

14. A cryptographic system for generating one or more cryptographic keys, wherein the cryptographic system comprises a bit generator (11) of a true number generator for generating random bits according to any preceding claim 1 to 13, the cryptographic system comprising a key generator for generating one or more cryptographic keys using said generated random bits.

## Patentansprüche

1. Bitgenerator (11) zum Generieren von Zufallsbits in einem echten Zufallszahlengenerator, wobei der Bitgenerator (11) eine oder mehrere RS-Latch-Schaltungen (40) umfasst, wobei jede RS-Latch-Schaltung (40) dazu konfiguriert ist, Zufallsbits zu generieren, wobei jede RS-Latch-Schaltung (40) ein erstes NAND-Gatter (401), ein zweites NAND-Gatter (402), einen ersten Eingangspuffer (403), einen zweiten Eingangspuffer (404), einen ersten Ausgangspuffer (405) und einen zweiten Ausgangspuffer (406) umfasst, wobei das erste NAND-Gatter (401) mittels eines ersten Eingangsdrahts (407) mit dem ersten Eingangspuffer (403) verbunden ist und mittels eines ersten Ausgangsdrahts (411) mit dem ersten Ausgangspuffer (405) verbunden ist, wobei ein Ausgang des ersten NAND-Gatters (401) die generierten Zufallsbits bereitstellt und mittels eines ersten Rückführdrahts an das zweite NAND-Gatter (402) zurückgeführt wird, wobei ein Ausgang des zweiten NAND-Gatters (402) mittels eines zweiten Rückführdrahts an das erste NAND-Gatter (401) zurückgeführt wird, wobei:
- der erste Rückführdraht einen ersten vertikalen Draht (409), der vertikal auf einer zweiten metallischen Schicht geführt ist, und einen ersten horizontalen Draht (410), der horizontal auf einer dritten metallischen Schicht geführt ist, umfasst, und
- der zweite Rückführdraht einen zweiten vertikalen Draht (412), der vertikal auf der zweiten metallischen Schicht geführt ist, und einen zweiten horizontalen Draht (411), der horizontal auf der dritten metallischen Schicht geführt ist, umfasst,
wobei jedes NAND-Gatter und jeder Puffer einen oder mehrere Eingangsports und einen Ausgangsport aufweist,
wobei der erste und der zweite Rückführdraht (409, 412) dieselben Punkte von Verbindungen mit den Eingangs- und Ausgangsports aufweisen, wobei dieselbe Länge des ersten vertikalen Drahts (409) und des zweiten vertikalen Drahts (412) bei der Führung auf der zweiten metallischen Schicht verwendet wird, und wobei dieselben Längen des ersten horizontalen Drahts (410) des ersten Rückführdrahts und des zweiten horizontalen Drahts (411) des zweiten Rückführdrahts bei der Führung auf der dritten metallischen Schicht verwendet werden.

2. Bitgenerator (11) nach Anspruch 1, wobei das erste NAND-Gatter (401) an einer gegebenen Position innerhalb der RS-Latch-Schaltung (40) positioniert ist und das zweite NAND-Gatter (402) an einer zweiten Position positioniert ist, wobei die zweite Position aus der Position des ersten NAND-Gatters (402) bestimmt wird, wobei das zweite NAND-Gatter (402) unter Verwendung einer 180-Grad-Drehung entgegen dem Uhrzeigersinn um eine fixierte Drehachse gedreht ist.

3. Bitgenerator (11) nach einem vorhergehenden Anspruch 1 oder 2, wobei der erste Eingangspuffer (403) rechts von dem ersten NAND-Gatter (401) positioniert ist, wobei der erste Eingangspuffer (403) und das erste NAND-Gatter (401) nebeneinander angeordnet sind, und wobei der zweite Eingangspuffer (404) rechts von dem ersten NAND-Gatter (401) positioniert und unter Verwendung einer 180-Grad-Drehung entgegen dem Uhrzeigersinn um die Drehachse gedreht ist, wobei der zweite Eingangspuffer (404) und das erste NAND-Gatter (401) nebeneinander angeordnet sind.

4. Bitgenerator (11) nach Anspruch 1, wobei der erste Ausgangspuffer (405) an der linken Seite der RS-Latch-Schaltung (40), dem ersten NAND-Gatter (401) zugewandt, mit einem vorbestimmten Zwischenraum zwischen dem ersten Ausgangspuffer (405) und dem ersten NAND-Gatter (401) angeordnet ist.

5. Bitgenerator (11) nach Anspruch 4, wobei der erste Ausgangsdraht (411) einen Ausgangsport des ersten NAND-Gatters (401) mit einem Eingangsport des ersten Ausgangspuffers (405) verbindet, wobei der Eingangsport des ersten Ausgangspuffers (405) dem Ausgangsport des ersten NAND-Gatters (401) zugewandt positioniert ist, wobei die Führung des ersten und des zweiten Rückführdrahts in dem vorbestimmten Zwischenraum zwischen dem ersten Ausgangspuffer (405) und dem ersten NAND-Gatter (401) angeordnet ist, wobei der vorbestimmte Zwischenraum von der Länge des ersten vertikalen Drahts (409) und der Länge des ersten horizontalen Drahts (410) abhängt.

6. Bitgenerator (11) nach einem vorhergehenden Anspruch 4 und 5, wobei der zweite Ausgangspuffer (406) in einem Abstand von dem ersten Ausgangspuffer (405) angeordnet und unter Verwendung einer 180-Grad-Drehung entgegen dem Uhrzeigersinn um die Drehachse gedreht ist.

7. Bitgenerator (11) nach einem vorhergehenden Anspruch, wobei das zweite NAND-Gatter (402) mittels eines zweiten Eingangsdrahts (408) mit dem zweiten Eingangspuffer (404) und mittels eines zweiten Ausgangsdrahts (410) mit dem zweiten Ausgangspuffer (406) verbunden ist.

8. Bitgenerator (11) nach Anspruch 7, wobei der erste Eingangsdraht (407) und der zweite Eingangsdraht (408) dieselbe Drahtlänge aufweisen und unter Verwendung eines Drahts einer ersten metallischen Schicht geführt werden.

9. Bitgenerator (11) nach Anspruch 8, wobei die Drahtlänge des ersten Eingangsdrahts (407) und des zweiten Eingangsdrahts (408) in Abhängigkeit von den Drahtwiderstand-Störeffekten und Drahtkapazität-Störeffekten, die dem ersten Eingangsdraht (407) und dem zweiten Eingangsdraht (408) zugeordnet sind, bestimmt wird.

10. Bitgenerator (11) nach einem vorhergehenden Anspruch, wobei der erste Eingangsdraht (407) einen Ausgangsport des ersten Eingangspuffers (403) mit einem Eingangsport des ersten NAND-Gatters (401) verbindet, wobei der Ausgangsport des ersten Eingangspuffers (403) nahe dem Eingangsport des ersten NAND-Gatters (401) angeordnet ist, um die Länge des ersten Eingangsdrahts (407) zu minimieren.

11. Bitgenerator (11) nach einem vorhergehenden Anspruch, wobei die Anzahl des einen oder der mehreren RS-Latch-Schaltungen (40) zuvor gemäß einer Zielquellenentropie bestimmt wird.

12. Bitgenerator (11) nach einem vorhergehenden Anspruch, wobei der erste Eingangspuffer (403) und der zweite Eingangspuffer (404) dazu konfiguriert sind, simultan ein Taktsignal zu empfangen.

13. Bitgenerator (11) nach einem vorhergehenden Anspruch, wobei die eine oder die mehreren RS-Latch-Schaltungen (40) dazu konfiguriert sind, gleichzeitig ein Taktsignal zu empfangen, wobei der erste Eingangspuffer (403) und der zweite Eingangspuffer (404) jeder von der einen oder den mehreren RS-Latch-Schaltungen (40) dazu konfiguriert sind, simultan das Taktsignal zu empfangen.

14. Kryptographisches System zum Generieren eines oder mehrerer kryptographischer Schlüssel, wobei das kryptographische System einen Bitgenerator (11) eines echten Zahlengenerators zum Erzeugen von Zufallsbits nach einem vorhergehenden Anspruch 1 bis 13 umfasst, wobei das kryptographische System einen Schlüsselgenerator zum Generieren eines oder mehrerer kryptographischer Schlüssel unter Verwendung der generierten Zufallsbits umfasst.

## Revendications

1. Générateur de bits (11) pour générer des bits aléatoires dans un générateur de nombres aléatoires réels, le générateur de bits (11) comprenant un ou plusieurs circuits à verrouillage RS (40), chaque circuit à verrouillage RS (40) étant configuré pour générer des bits aléatoires, chaque circuit à verrouillage RS (40) comprenant une première porte NAND (401), une deuxième porte NAND (402), un premier tampon d'entrée (403), un deuxième tampon d'entrée (404), un premier tampon de sortie (405) et un deuxième tampon de sortie (406), la première porte NAND (401) étant connectée au premier tampon d'entrée (403) *via* un premier fil d'entrée (407) et étant connectée au premier tampon de sortie (405) *via* un premier fil de sortie (411), une sortie de la première porte NAND (401) fournissant lesdits bits aléatoires générés et étant renvoyée à la deuxième porte NAND (402) *via* un premier fil de retour, une sortie de la deuxième porte NAND (402) étant renvoyée à la première porte NAND (401) *via* un deuxième fil de retour, dans lequel :
- le premier fil de retour comprend un premier fil vertical (409) acheminé verticalement sur une deuxième couche métallique et un premier fil horizontal (410), acheminé horizontalement sur une troisième couche métallique, et
- le deuxième fil de retour comprend un deuxième fil vertical (412) acheminé verticalement sur ladite deuxième couche métallique et un deuxième fil horizontal (411) acheminé horizontalement sur ladite troisième couche métallique,
dans lequel chaque porte NAND et chaque tampon présente un ou plusieurs ports d'entrée et un port de sortie,
dans lequel les premier et deuxième fils de retour (409, 412) ont les mêmes points de connexion avec lesdits ports d'entrée et de sortie, la même longueur du premier fil vertical (409) et du deuxième fil vertical (412) étant utilisée au niveau de l'acheminement sur la deuxième couche métallique, et les mêmes longueurs du premier fil horizontal (410) du premier fil de retour et du deuxième fil horizontal (411) du deuxième fil de retour étant utilisées au niveau de l'acheminement sur la troisième couche métallique.

2. Générateur de bits (11) selon la revendication 1, dans lequel la première porte NAND (401) est positionnée au niveau d'une position donnée dans ledit circuit à verrouillage RS (40) et la deuxième porte NAND (402) est positionnée au niveau d'une deuxième position, ladite deuxième position étant déterminée à partir de la position de la première porte NAND (402), la deuxième porte NAND (402) étant mise en rotation en utilisant une rotation de 180 degrés dans le sens inverse des aiguilles d'une montre autour d'un axe de rotation fixe.

3. Générateur de bits (11) selon l'une quelconque des revendications précédentes 1 et 2, dans lequel le premier tampon d'entrée (403) est positionné à la droite de la première porte NAND (401), le premier tampon d'entrée (403) et la première porte NAND (401) étant disposés côte à côte, et dans lequel le deuxième tampon d'entrée (404) est positionné à la droite de la première porte NAND (401) et mis en rotation en utilisant une rotation de 180 degrés dans le sens inverse des aiguilles d'une montre autour dudit axe de rotation, le deuxième tampon d'entrée (404) et la première porte NAND (401) étant disposés côte à côte.

4. Générateur de bits (11) selon la revendication 1, dans lequel le premier tampon de sortie (405) est disposé sur le côté gauche du circuit à verrouillage RS (40) face à la première porte NAND (401), avec un espace prédéterminé entre le premier tampon de sortie (405) et la première porte NAND (401).

5. Générateur de bits (11) selon la revendication 4, dans lequel le premier fil de sortie (411) relie un port de sortie de la première porte NAND (401) à un port d'entrée du premier tampon de sortie (405), le port d'entrée du premier tampon de sortie (405) étant positionné face au port de sortie de la première porte NAND (401), l'acheminement du premier et du deuxième fils de retour étant disposé dans ledit espace prédéterminé entre le premier tampon de sortie (405) et la première porte NAND (401), ledit espace prédéterminé dépendant de la longueur dudit premier fil vertical (409) et de la longueur dudit premier fil horizontal (410).

6. Générateur de bits (11) selon l'une quelconque des revendications précédentes 4 et 5, dans lequel le deuxième tampon de sortie (406) est disposé à une distance dudit premier tampon de sortie (405) et mis en rotation en utilisant une rotation de 180 degrés dans le sens inverse des aiguilles d'une montre autour dudit axe de rotation.

7. Générateur de bits (11) selon l'une quelconque des revendications précédentes, dans lequel la deuxième porte NAND (402) est connectée au deuxième tampon d'entrée (404) *via* un deuxième fil d'entrée (408) et au deuxième tampon de sortie (406) *via* un deuxième fil de sortie (410).

8. Générateur de bits (11) selon la revendication 7, dans lequel le premier fil d'entrée (407) et le deuxième fil d'entrée (408) ont la même longueur de fil et sont acheminés à l'aide d'un fil d'une première couche métallique.

9. Générateur de bits (11) selon la revendication 8, dans lequel la longueur de fil du premier fil d'entrée (407) et du deuxième fil d'entrée (408) est déterminée en fonction des parasites de résistance du fil et des parasites de capacité du fil associés audit premier fil d'entrée (407) et audit deuxième fil d'entrée (408).

10. Générateur de bits (11) selon l'une quelconque des revendications précédentes, dans lequel le premier fil d'entrée (407) relie un port de sortie du premier tampon d'entrée (403) à un port d'entrée de la première porte NAND (401), le port de sortie du premier tampon d'entrée (403) étant disposé à proximité du port d'entrée de la première porte NAND (401) de manière à minimiser la longueur du premier fil d'entrée (407).

11. Générateur de bits (11) selon l'une quelconque des revendications précédentes, dans lequel le nombre desdits un ou plusieurs circuits à verrouillage RS (40) est préalablement déterminé en fonction d'une entropie de source cible.

12. Générateur de bits (11) selon l'une quelconque des revendications précédentes, dans lequel le premier tampon d'entrée (403) et le deuxième tampon d'entrée (404) sont configurés pour recevoir simultanément un signal d'horloge.

13. Générateur de bits (11) selon l'une quelconque des revendications précédentes, dans lequel l'un ou les plusieurs circuits à verrouillage RS (40) sont configurés pour recevoir un signal d'horloge en même temps, le premier tampon d'entrée (403) et le deuxième tampon d'entrée (404) de chacun de l'un ou des plusieurs circuits à verrouillage RS (40) étant configurés pour recevoir simultanément ledit signal d'horloge.

14. Système cryptographique pour générer une ou plusieurs clés cryptographiques, dans lequel le système cryptographique comprend un générateur de bits (11) d'un générateur de nombres réels pour générer des bits aléatoires selon l'une quelconque des revendications précédentes 1 à 13, le système cryptographique comprenant un générateur de clés pour générer une ou plusieurs clés cryptographiques en utilisant lesdits bits aléatoires générés.
